# EUROPÄISCHE PATENTSCHRIFT

(11) **EP 2 943 447 B1**
(45) Veröffentlichungstag und Bekanntmachung des Hinweises auf die Patenterteilung: **27.06.2018**
(21) Anmeldenummer: 14700340.4
(22) Anmeldetag: 08.01.2014
(51) Int. Cl.: C04B 28/16, C04B 111/00, C04B 111/27, C04B 111/60, C04B 111/70, C04B 111/28

(54) **WASSERBESTÄNDIGES BINDEMITTEL AUF BASIS VON ANHYDRIT**
WATER-RESISTANT BINDER BASED ON ANHYDRITE
LIANT RÉSISTANT À L'EAU À BASE D'ANHYDRITE

(30) Priorität: 08.01.2013 DE 102013200121
(43) Veröffentlichungstag der Anmeldung: 18.11.2015
(73) Patentinhaber: Henkel AG & Co. KGaA, 40589 Düsseldorf (DE)
(72) Erfinder: AUER, Stephan, 58730 Fröndenberg (DE); OSOWSKI, Eugeniusz, PL-64-980 Trzcianka (PL)
(86) Internationale Anmeldenummer: PCT/EP2014/050213
(87) Internationale Veröffentlichungsnummer: WO 2014/108435

(56) Entgegenhaltungen:
- DE-A1- 10 124 149
- DE-A1- 10 219 975
- DE-A1-102011 078 531

## Beschreibung

Die Erfindung betrifft wasserbeständige Bindemittel, sowie bauchemische Erzeugnisse. Die Erfindung betrifft insbesondere solche Bindemittel, die Anhydrit, Portlandzement, Zeolith oder Mischung aus Metakaolin und Zeolith sowie ein zusätzliches Sulfatsalz enthalten.

Aus dem Stand der Technik sind Calciumsulfat-haltige Bindemittelzusammensetzungen bekannt. So beschreibt die europäische Patentanmeldung EP 0 849 237 A1 Zusammensetzungen auf Basis von Calciumsulfat-Hemihydrat, Portlandzement und Metakaolin.

Bei den in EP 0 849 237 A1 beschriebenen Zusammensetzungen ist allerdings nachteilig, dass das eingesetzte Calciumsulfat-Hemihydrat einer thermischen Aufbereitung bedarf. Dies ist aus ökologischen Gründen, insbesondere mit Blick auf den so genannten CO₂-Fußabdruck, nicht erstrebenswert.

Aus der DE 33 39 197 A1 sind selbstverfließende glättende Estrichmassen und Verfahren zu ihrer Herstellung bekannt. Diese enthalten als zwingende Komponenten Zement, Sand und/oder Kalksteinmehl, Kasein, Natriumfluorid und schließlich einen Bestandteil ausgewählt aus Gips, Kieselerde, Bentonit oder deren Gemischen. Es handelt sich um zementbasierte Systeme, die Gips allenfalls in untergeordneter Menge enthalten. Nachteilig an zementbasierten Systemen ist wiederum der hohe Energiebedarf bei der Herstellung der Zemente.

DD 287 473 A5 offenbart alkaligesteuerten, hochfesten Portlandkompositzement und Verfahren zur Herstellung von hochfestem, dauerbeständigem Beton. Der Portlandkompositzement basiert auf einer alkalihaltigen, Calciumhydroxid freisetzenden Komponente, beispielsweise Portlandzement, und einer sulfatischen Komponente, beispielsweise Calciumsulfat-Hemihydrat und/oder Anhydrit, sowie mindestens zwei im alkalischen Milieu unterschiedlich schnell reagierenden Puzzolankomponenten und/oder latenthydraulischen Komponenten. Die sulfatische Komponente wird dabei im deutlichen Unterschuss zur Zementkomponente eingesetzt.

In WO 2013/004621 A1 werden Gips-haltige Baustoffmassen beschrieben, die Gips, ein oder mehrere Zemente, ein oder mehrere Puzzolane und gegebenenfalls verschiedene Zuschläge und/oder Zusatzstoffe, insbesondere bestimmte Polymere enthalten. Sämtliche bekannte Gipsarten und -modifikationen werden als geeignet beschrieben und auch die verschiedensten Zemente und Puzzolane können zum Einsatz kommen. Die Mengenverhältnisse der einzelnen Komponenten können in weiten Grenzen variieren, so dass sowohl Baustoffmassen umfasst sind, die als Hauptbindemittel Gips enthalten, als auch solche, bei denen Zement das Hauptbindemittel darstellt. DE10219975A1 zeigt (A1) einen selbstnivellierenden Fliessestrich auf der Basis von Anhydrit, welcher eine erhöhte Wasserfestigkeit auch bei einem vollständigen oder teilweisen Ersatz der puzzolanischen Flugaschen aufweist.

Vor diesem Hintergrund bestand die an die vorliegende Erfindung gestellte Aufgabe darin, andere wasserbeständige Bindemittel auf Basis einer Gipskomponente bereitzustellen.

Diese Aufgabe wird vom Gegenstand der Erfindung gelöst. Dabei handelt es sich um eine Bindemittelzusammensetzung, insbesondere pulverförmige Zusammensetzung, umfassend
(a) Anhydrit in einer Menge von ≥ 50 Gew.- Teilen,
(b) Portlandzement in einer Menge von 1 bis 45 Gew.- Teilen,
(c) Zeolith oder Mischung aus Metakaolin und Zeolith in einer Gesamtmenge von 1 bis 30 Gew.- Teilen,
(d) zusätzliches Sulfatsalz in einer Menge von 0,1 bis 10 Gew.-Teilen, jeweils bezogen auf eine Gesamtmenge von 100 Gew.- Teilen, gebildet von den vier Komponenten (a) Anhydrit, (b) Portlandzement, (c) Zeolith oder Mischung aus Metakaolin und Zeolith, (d) zusätzliches Sulfatsalz.

Diese Bindemittelzusammensetzung zeichnet sich vorteilhafterweise dadurch aus, dass sie nach Zugabe des notwendigen Anmachwassers unter Wasseraufnahme an Luft erhärtet und nach dem Aushärten wasserbeständig ist und zu einem überaus wasserfesten Baustoff führt. Anmachwasser (auch Zugabewasser genannt) bezeichnet das Wasser, welches bei der Mischung und Aufbereitung der Bindemittelzusammensetzung eingebracht werden muss, um diese verarbeitbar zu machen und den Abbindeprozess in Gang zu bringen. Die gesamte Wassermenge in der Mischung setzt sich zusammen aus der Menge, die mit dem optionalen Zuschlagmaterial (vorzugsweise Sand, Kies) in die Mischung gelangt und dem Zugabewasser. Zugabewasser wird jeweils nur in einer solchen Menge zugegeben, dass die zur Verarbeitung erforderliche Konsistenz erreicht wird. Die Menge des Zugabewassers kann der Fachmann ohne weiteres jeweils durch wenige Handversuche ermitteln. Bei werkseitig gefertigten bauchemischen Werktrockenmörteln wird die Menge des Anmachwassers durch den Hersteller auf den jeweiligen technischen Begleitdokumenten angegeben.

Die Wasserbeständigkeit manifestiert sich darin, dass die physikalischen Festigkeitseigenschaften des ausgehärteten Binders bei Wasserkontakt erhalten bleiben. Auch die langfristigen Nutzungseigenschaften werden bei Wasserkontakt nicht beeinträchtigt. Die erfindungsgemäße Bindemittelzusammensetzung ist somit auch ohne weiteres im Außenbereich einsetzbar und hält Witterungseinflüssen stand. Auch die genormten Mindestanforderungen für bauchemische Produkte, welche die erfindungsgemäßen Zusammensetzungen enthalten, werden erfüllt. Beispielsweise werden bei den aus erfindungsgemäßen Bindemittelzusammensetzungen resultierenden Fliesenklebern die genormten Anforderungen nach DIN EN 12004:2007 an die Haftzugfestigkeitswerte nach Trockenlagerung (gemessen nach Prüfverfahren EN 1348:2007, 8.2), nach Wasserlagerung (gemessen nach Prüfverfahren EN 1348:2007, 8.3), nach Warmlagerung (gemessen nach Prüfverfahren EN 1348:2007, 8.4) und nach Frost-Tauwechsel-Lagerung (gemessen nach Prüfverfahren EN 1348:2007, 8.5) erfüllt. Im Gegensatz dazu weisen Fliesenkleber, die als Bindemittel ausschließlich Gips oder ein Gips/Zement-Gemisch mit einem Gipsanteil von 50 Gew.-% oder mehr enthalten, nach Wasserlagerung und nach Frost-Tauwechsellagerung unzureichende Haftzugfestigkeiten auf. Wird ausschließlich Gips eingesetzt, liegen die entsprechenden Haftzugfestigkeiten bei nahezu 0 N/mm².

Außerdem bleiben die positiven Anwendungseigenschaften des Calciumsulfates, wie insbesondere gute Frühfestigkeit, einfache Verarbeitbarkeit, geringes Schwinden erhalten.

Im Vergleich zur Verwendung von Calciumsulfat-Hemihydrat, das einer thermischen Aufbereitung bedarf, ist der Einsatz von Anhydrit auch in ökologischer Hinsicht vorteilhaft, da Anhydrit als natürliches Mineral verfügbar und einsetzbar ist. Es muss nicht erst wie das Calciumsulfat-Hemihydrat einer thermischen Aufbereitung unterworfen werden, um in der erfindungsgemäßen Bindemittelzusammensetzung erfolgreich eingesetzt werden zu können. Es konnte in überraschender Weise gefunden werden, dass gerade die Kombination von Anhydrit mit Portlandzement und Zeolith, vorzugsweise natürlicher Zeolith, vorteilhafterweise ausgewählt aus Blätterzeolithen, bevorzugt Zeolithen der Heulandit-Gruppe, insbesondere Klinoptilolith und/oder Metkaolin, sowie einem zusätzlichen Sulfatsalz zu besonders guten Resultaten führt, was Anwendungs- und Materialeigenschaften betrifft.

Ein Vorteil der Erfindung liegt darin, dass die erfindungsgemäße Zusammensetzung unter Wasseraufnahme sehr schnell härtet und eine hohe Frühfestigkeit zeigt. Auf Basis dieser Zusammensetzungen lassen sich beispielsweise Fliesenkleber erhalten, die bereits nach einer Trockenzeit von 3 Stunden begehbar sind und eine Haftzugfestigkeit (gemessen nach Prüfverfahren EN 1348:2007, 8.2) von mehr als 0,3 N/mm² aufweisen. Die Wasserbeständigkeit des resultierenden Baustoffs ebenso wie dessen Oberflächenbeschaffenheit sowie Widerstandsfähigkeit gegenüber extremen natürlichen Witterungs- und Temperatureinflüssen sind hervorragend. Die resultierenden Baustoffe zeigen eine hervorragende Langzeitstabilität.

Ein weiterer Vorteil liegt darin, dass die erfindungsgemäße Zusammensetzung unter Wasseraufnahme auch bei niedrigen Temperaturen sehr schnell härtet. Die Härtungsdauer bei 5°C ist überraschenderweise im Vergleich zur Härtungsdauer bei 23°C maximal doppelt so lang.

Noch ein weiterer Vorteil liegt darin, dass der resultierende wasserfeste Baustoff allenfalls ein überaus geringes Schwinden zeigt, welches ungefähr 5- bis 10-mal niedriger als das von Baustoffen auf Basis von reinem Portlandzement ist.

Wiederum ein weiterer Vorteil liegt darin, dass die erfindungsgemäße Zusammensetzung vom Farbeindruck deutlich heller als gewöhnlicher grauer Portlandzement ist. Sollte ein dunklerer Farbeindruck angestrebt werden, lässt sich das z.B. einfach durch Zumischung von Ruß erreichen.

Ein anderer Vorteil liegt darin, dass die erfindungsgemäßen Zusammensetzungen und diese enthaltende bauchemischen Produkte eine hervorragende Verarbeitbarkeit nach Anmischen mit dem Anmachwasser zeigen. Insbesondere zeigen Produkte, die auf der erfindungsgemäßen Bindemittelzusammensetzung basieren, ein deutlich reduziertes Stauben verglichen mit den üblichen Produkten.

Unter bauchemischen Produkten werden erfindungsgemäß Zusammensetzungen verstanden, die neben einer Bindemittelzusammensetzung mindestens 10 Gew.-Teile, vorzugsweise mindestens 35 Gew.-Teile, jeweils bezogen auf das Gesamtgewicht des bauchemischen Produkts, mindestens eines Zuschlagstoffs enthalten. Geeignete Zuschlagsstoffe werden unten genannt.

Die erfindungsgemäßen Zusammensetzungen lassen sich hervorragend als Bindemittel in bauchemischen Produkten wie z.B. Fliesenkleber, Fugenmörtel, Ankermörtel, Putz- und Mauermörtel, Klebe- und Armierungsmörtel für Wärmedämmverbundsysteme (external thermal insulation composite systems: "ETICS"), Estriche und selbstverlaufenden Fußbodenausgleichsmassen einsetzen, sowie nach Zugabe entsprechender Zuschlagstoffe, wie insbesondere Quarzsand, beim Mörteln, Verankern, Pflastern, Verputzen oder Beschichten von Innen- oder Außenflächen, z.B. von Gebäudewänden oder Decken und Reparieren von Flächen, z.B. Auffüllen von Rissen in Wänden oder Böden, sowie beim Gießen in Formen einsetzen.

Ein weiterer Vorteil ist, dass auf den Einsatz von Hydrophobiermitteln, wie beispielsweise Stearate von Calcium oder Zink, die Hydrophobie verleihen, verzichtet werden kann. Vorzugsweise sind erfindungsgemäße bauchemische Produkte frei von Hydrophobiermitteln.

Die erfindungsgemäße Zusammensetzung umfasst als zwingende Bestandteile Anhydrit, Portlandzement, Zeolith oder Mischung aus Metakaolin und Zeolith sowie weiterhin ein zusätzliches Sulfatsalz; sie liegt insbesondere in trockener, pulverförmiger Form vor. Anhydrit ist dem Fachmann an sich bekannt und liegt in natürlicher Form als Anhydrit-II in zahlreichen Lagerstätten vor. Es handelt sich dabei um kristallwasserfreies Calciumsulfat. Anhydrit ist ein Sediment-Mineral, das bisher an über 1000 natürlichen Fundorten nachgewiesen werden konnte. Im Sinne der Erfindung besonders bevorzugt ist der so genannte Anhydrit-II, auch Rohanhydrit, β-Anhydrit sowie natürlicher Anhydrit genannt.

Neben den natürlichen Vorkommen kann Anhydrit auch in technischen Prozessen gewonnen werden. Und zwar kann er durch das Erhitzen von Gips, CaSO₄·2H₂O, gewonnen werden. Beim Erhitzen von Gips auf 120 bis etwa 180 °C entsteht zunächst das Halbhydrat. Bei Erhitzung auf 180-240°C wird der Restkristallwassergehalt auf einen Gehalt von ca. 1% ausgetrieben. Dabei entsteht Anhydrit III. Weiteres Erhitzen auf 240 bis 600°C führt zur vollständigen Austreibung des Kristallwassers. Es entsteht Anhydrit II. Typische Beispiele technischer Entstehungstemperaturen liegen bei 350°C oder 400°C bis hinauf zu 800°C.

Erfindungsgemäß können sowohl Anhydrit III als auch Anhydrit II als auch deren Gemische eingesetzt werden. Es entspricht allerdings einer bevorzugten Ausführungsform, Anhydrit II einzusetzen, insbesondere in einer Teilchengröße d50 von 3-40 µm, insbesondere 5-30 µm. Dabei kann Anhydrit II ein Produkt aus natürlichen Vorkommen sein, der ggf. aufbereitet wurde, oder aus synthetischer Herstellung.

Dabei ist der Anhydrit II aus natürlichen Vorkommen (Naturanhydrit) am meisten bevorzugt.

Der Anhydrit wird insbesondere in pulverförmiger Form eingesetzt. Die mittlere Teilchengröße d50 liegt vorzugsweise unter 100 µm, vorteilhafterweise unter 50 µm und insbesondere über 3 µm und unter 40 µm. Eine Teilchengröße d50 von 5-30 µm ist besonders bevorzugt. Dabei bedeutet "mittlere Teilchengröße d50 = a µm", dass von dem betrachteten Gut 50 Masse-% der Partikel einen Durchmesser größer als a µm und 50 Masse-% einen kleineren Durchmesser als a µm haben. Die mittlere Teilchengröße wird erfindungsgemäß mit dem nach dem Prinzip der Analyse der Beugung von inkohärentem Licht am Partikelstrom arbeitenden, von der Firma Retsch Technology vertriebenen Messgerät Crystalsizer bestimmt.

Der Einsatz von Anhydrit, insbesondere Naturanhydrit, der zuvor beschriebenen Art führt zu besonders guten Anwendungs- und Materialeigenschaften, insbesondere mit Blick auf die Wasserbeständigkeit, Frühfestigkeit, Verarbeitbarkeit und geringstmögliches Schwinden.

Der Begriff "Portlandzement" steht im Sinne dieser Erfindung ganz allgemein für einen Zement, der unter Wasseraufnahme härtet. Ein solcher Zement kann insbesondere auf herkömmliche Weise durch Erhitzen eines Schlammes aus Ton und Calciumcarbonat hergestellt werden. Die Norm DIN EN 197-1:2011 unterscheidet die nachstehenden Zementtypen CEM I bis CEM V, nämlich
CEM I Portlandzemente,
CEM II Portlandkompositzemente,
CEM III Hochofenzemente,
CEM IV Puzzolanzemente,
CEM V Kompositzemente.

Insbesondere diese 5 Zementtypen CEM I bis CEM V der Norm DIN EN 197-1:2011 sind erfindungsgemäß von dem Begriff "Portlandzement" umfasst. Die einsetzbaren Zementtypen umfassen jeweils Portlandzementklinker. Weitere optionale Bestandteile sind insbesondere Hüttensand, Silicastaub, Puzzolane, Flugasche, gebrannter Schiefer, Kalkstein sowie andere Nebenbestandteile. Die Bestandteile der Zementtypen ergeben sich aus der Norm DIN EN 197-1: 2011. Beispielsweise weist der Zementtyp CEM I 95-100 Masse-% Portlandzementklinker auf. Besonders bevorzugte Zementtypen im Sinne der Erfindung sind die Typen CEM I bis CEM V mit einem Portlandzementklinkeranteil ≥ 40 Masse-%. Insbesondere bevorzugt sind die Typen CEM I und CEM II.

Die Mahlfeinheit des einsetzbaren Portlandzements, ausgedrückt als Blaine-Wert, beträgt vorzugsweise > 2500 cm²/g. Der Blaine-Wert ist ein standardisiertes Maß für den Grad der Feinvermahlung von Zement, vorzugsweise bestimmt nach EN 196-6. Er wird angegeben als labortechnisch mit dem Blaine-Gerät ermittelte spezifische Oberfläche (cm²/g). Die Bestimmung des Blaine-Wertes ist dem Fachmann bekannt und in der Literatur ausführlich beschrieben, z.B. "Die Prüfung der Mahlfeinheit mit dem Gerät von Blaine", Band 7 von Schriftenreihe der Zementindustrie, Autor: Fritz Gille, Bauverlag 1951.

Der Portlandzement wird insbesondere in pulverförmiger Form eingesetzt. Die mittlere Teilchengröße d50 liegt vorzugsweise unter 50 µm, vorteilhafterweise unter 30 µm und insbesondere zwischen 0,5 µm und ≥ 25 µm. Dabei bedeutet "mittlere Teilchengröße d50 = a µm", dass von dem betrachteten Gut 50 Masse-% der Partikel einen Durchmesser größer als a µm und 50 Masse-% einen kleineren Durchmesser als a µm haben. Die mittlere Teilchengröße wird nach der oben genannten Methode bestimmt.

Der Einsatz von Portlandzement der zuvor beschriebenen Art, insbesondere mit Blick auf Teilchengröße d50 und Blaine-Wert führt wiederum zu besonders guten Anwendungs- und Materialeigenschaften, vor allem mit Blick auf die Wasserbeständigkeit, Frühfestigkeit, Verarbeitbarkeit und geringstmögliches Schwinden.

Auch Zeolithe sind dem Fachmann an sich bekannt. Es handelt sich dabei um kristalline Alumosilicate. Derzeit sind über 150 natürliche und synthetische Zeolithe bekannt. Erfindungsgemäß können sowohl natürliche als auch synthetische Zeolithe eingesetzt werden. Dabei sind natürliche Zeolithe bevorzugt. Diese lassen sich nach ihren Kristallgittern einteilen in Faserzeolithe (insbesondere umfassend Natrolith, Laumontit, Mordenit, Thomsonit), Blätterzeolithe (insbesondere umfassend Heulandit, Stilbit, Phillipsit, Harmotom, Yugawaralith) und Würfelzeolithe (insbesondere umfassend Faujasit, Gmelinit, Chabasit, Offretit, Levyn). Besonders bevorzugt im Sinne der Erfindung sind Blätterzeolithe der Heulandit-Gruppe, insbesondere Klinoptilolith.

Der Zeolith wird insbesondere in pulverförmiger Form eingesetzt. Die mittlere Teilchengröße d50 des Zeoliths liegt vorzugsweise unter 100 µm, vorteilhafterweise unter 50 µm und insbesondere über 0,5 µm und unter 15 µm. Dabei bedeutet "mittlere Teilchengröße d50 = a µm", dass von dem betrachteten Gut 50 Masse-% der Partikel einen Durchmesser größer als a µm und 50 Masse-% einen kleineren Durchmesser als a µm haben. Die mittlere Teilchengröße wird nach der o.g. Methode bestimmt.

Gemäß einer besonders bevorzugten Ausführungsform ist als Zeolith also natürlicher Zeolith enthalten, vorzugsweise ausgewählt aus Blätterzeolithen, vorteilhafterweise Zeolithen der Heulandit-Gruppe, insbesondere Klinoptilolith, wobei die mittlere Teilchengröße d50 des Zeoliths vorzugsweise unter 100 µm, vorteilhafterweise unter 50 µm und insbesondere über 0,5 µm und unter 15 µm liegt. Auch diese Ausführungsform führt zu besonders guten Anwendungs- und Materialeigenschaften, insbesondere mit Blick auf die Wasserbeständigkeit, Frühfestigkeit, Verarbeitbarkeit und geringstmögliches Schwinden.

Metakaolin ist ein Produkt, das beim Brennen von Kaolin und Kaolinitton entsteht. Dabei ist die Puzzolanaktivität vorzugsweise derart, dass die Reaktivität des Metakaolins mit Calciumhydroxid ≥ 500 mg, vorzugsweise ≥ 700 mg und insbesondere ≥ 1000 mg Calciumhydroxid pro g beträgt. Das Metakaolin kann vorzugsweise durch Brennen eines Kaolinittons bei einer Temperatur von 450 bis 900°C hergestellt werden. Die Reaktivität eines Metakaolins mit Calciumhydroxid kann insbesondere durch ein Verfahren bestimmt werden, das auf dem Gebiet der Betontechnik und in der Literatur als "Chapelle-Test" bezeichnet wird. Diesbezüglich und zur Auswahl besonders geeigneter Metakaoline wird auf die bereits genannte EP 0 849 237 A1 und auch auf die darin genannten Literaturstellen zur Puzzolan-Reaktivität eines Metakaolins verwiesen.

Das Metakaolin wird insbesondere in pulverförmiger Form eingesetzt. Die mittlere Teilchengröße d50 liegt vorzugsweise unter 20 µm, vorteilhafterweise unter 10 µm und insbesondere über 0,5 µm und unter 5 µm. Dabei bedeutet "mittlere Teilchengröße d50 = a µm", dass von dem betrachteten Gut 50 Masse-% der Partikel einen Durchmesser größer als a µm und 50 Masse-% einen kleineren Durchmesser als a µm haben. Die mittlere Teilchengröße wird nach der o.g. Methode bestimmt.

Die vorliegende Erfindung ermöglicht den Einsatz von Mischungen aus Metakaolin und Zeolith (vorzugsweise natürlicher Zeolith, vorteilhafterweise ausgewählt aus Blätterzeolithen, bevorzugt Zeolithen der Heulandit-Gruppe, insbesondere Klinoptilolith), z.B. im Massenverhältnis Metakaolin zu Zeolith von 10:1 bis 1:10 oder beispielsweise 5:1 bis 1:5 oder beispielsweise 2:1 bis 1:2. Alternativ kann nur Zeolith eingesetzt werden. Die erfindungsgemäßen Bindemittelzusammensetzungen enthalten Zeolith, vorzugsweise natürlichen Zeolith, vorteilhafterweise ausgewählt aus Blätterzeolithen, bevorzugt Zeolithen der Heulandit-Gruppe, insbesondere Klinoptilolith, oder eine Gemisch aus Zeolith und Metakaolin. Sofern ein Gemisch aus Zeolith und Metakaolin eingesetzt wird, ist es bevorzugt, dass das Massenverhältnis von Metakaolin zu Zeolith kleiner als 1 ist.

Wenn Anhydrit in der erfindungsgemäßen Bindemittelzusammensetzung in einer Menge von 60 bis 98 Gew.- Teilen, vorzugsweise in einer Menge von 60 bis 97,9 Gew.-Teilen, insbesondere in einer Menge von 60 bis 89 Gew.- Teilen, besonders bevorzugt in einer Menge von 70 bis 79 Gew.- Teilen und ganz besonders bevorzugt in einer Menge von 70 bis 78 Gew.- Teilen enthalten ist, bezogen auf eine Gesamtmenge von 100 Gew.- Teilen, die gebildet ist von den vier Komponenten (a) Anhydrit, (b) Portlandzement, (c) Zeolith oder Mischung aus Metakaolin und Zeolith, (d) zusätzliches Sulfatsalz, so liegt eine bevorzugte Ausführungsform der Erfindung vor.

Es ist auch bevorzugt, wenn der Portlandzement in der erfindungsgemäßen Bindemittelzusammensetzung in einer Gesamtmenge von 5 bis 30 Gew.- Teilen, vorzugsweise 8 bis 20 Gew.- Teilen, insbesondere 10 bis 20 Gew.- Teilen und ganz besonders bevorzugt 11 bis 20 Gew.- Teilen enthalten ist, bezogen auf eine Gesamtmenge von 100 Gew.- Teilen, gebildet von den vier Komponenten (a) Anhydrit, (b) Portlandzement, (c) Zeolith oder Mischung aus Metakaolin und Zeolith, (d) zusätzliches Sulfatsalz.

Vorzugsweise ist zudem Zeolith oder Mischung aus Metakaolin und Zeolith in der erfindungsgemäßen Bindemittelzusammensetzung in einer Gesamtmenge von 5 bis 25 Gew.- Teilen, vorzugsweise 8 bis 20 Gew.- Teilen, insbesondere 10 bis 20 Gew.- Teilen enthalten, bezogen auf eine Gesamtmenge von 100 Gew.- Teilen, gebildet von den vier Komponenten (a) Anhydrit, (b) Portlandzement, (c) Zeolith oder Mischung aus Metakaolin und Zeolith, (d) zusätzliches Sulfatsalz.

Die erfindungsgemäße Zusammensetzung enthält weiterhin zusätzliches Sulfatsalz, vorzugsweise Alkalisulfat, insbesondere Kaliumsulfat, Eisen(II)-sulfat, und/oder Aluminiumsulfat. Das zusätzliche Sulfatsalz ist vorzugsweise in einer Menge von 1 bis 5 Gew.-Teilen enthalten, bezogen auf eine Gesamtmenge von 100 Gew.- Teilen, gebildet von den vier Komponenten (a) Anhydrit, (b) Portlandzement, (c) Zeolith oder Mischung aus Metakaolin und Zeolith, (d) zusätzliches Sulfatsalz.

Besonders bevorzugte zusätzliche Sulfatsalze sind ausgewählt aus Kaliumsulfat, Aluminiumsulfat und deren Mischungen.

Selbstverständlich können die Sulfatsalze, insbesondere das Aluminiumsulfat, auch in Form ihrer Hydrate vorliegen.

Das zusätzliche Sulfatsalz wird insbesondere in pulverförmiger Form eingesetzt.

Die erfindungsgemäße Bindemittelzusammensetzung kann ausschließlich aus den vier Komponenten (a) Anhydrit, (b) Portlandzement, (c) Zeolith oder Mischung aus Metakaolin und Zeolith, (d) zusätzliches Sulfatsalz bestehen. Es ist jedoch auch möglich, dass sie Additive enthält.

Beispielsweise kann CaO als Additiv zugegeben werden, und zwar vorzugsweise in den Mengen, die zuvor für das zusätzliche Sulfatsalz genannt worden sind.

Eine besonders bevorzugte erfindungsgemäße Zusammensetzung umfasst Anhydrit, Portlandzement, Zeolith, Metakaolin und zusätzliches Sulfatsalz, wie zuvor beschrieben. Auch diese Ausführungsform kann noch weitere Additive umfassen.

Dementsprechend entspricht eine Bindemittelzusammensetzung, umfassend
(a) Anhydrit in einer Menge von ≥ 50 Gew.- Teilen,
(b) Portlandzement in einer Menge von 1 bis 45 Gew.- Teilen,
(c) Zeolith und Metakaolin in einer Gesamtmenge von 1 bis 30 Gew.- Teilen,
(d) zusätzliches Sulfatsalz, vorzugsweise Alkalisulfat, insbesondere Kaliumsulfat, Eisen(II)-sulfat, und/oder Aluminiumsulfat, in einer Menge von 0,1 bis 10 Gew.-Teilen, insbesondere 1 bis 5 Gew.- Teilen,
jeweils bezogen auf eine Gesamtmenge von 100 Gew.- Teilen, gebildet von den vier Komponenten (a) Anhydrit, (b) Portlandzement, (c) Zeolith und Metakaolin, (d) zusätzliches Sulfatsalz, einer bevorzugten Ausführungsform der Erfindung.

Da die erfindungsgemäße Bindemittelzusammensetzung nach Zugabe von Wasser ("Anmachen", hierbei bilden sich zunächst plastische Gemische) an Luft steinartig erhärtet und nach dem Aushärten wasserbeständig ist, kann es als Bindemittel in beliebigen bauchemischen Zusammensetzungen, vorzugsweise enthaltend übliches Zuschlagmaterial, wie insbesondere Quarzsand und/oder Kalksteinsand, eingesetzt werden, insbesondere zu dem Zweck, zwei Gegenstände miteinander zu verbinden. Somit kann eine wasserfeste Bindung zwischen den Gegenständen erhalten werden. Die Gegenstände können beliebige bekannte Gegenstände sein, so z.B. Ziegelsteine, Blocksteine, Mosaike, Platten, Dämmstoffplatten, Natursteine, Fliesen, Kacheln und dergleichen. Auch Verankerungen von Rohren und Metallelementen sind möglich.

Die erfindungsgemäße Bindemittelzusammensetzung kann grundsätzlich in allen üblichen bauchemischen Werktrockenmörtelprodukten eingesetzt werden, wie z.B. Fliesenkleberzusammensetzungen, Fugenmörtelzusammensetzungen, Reparaturmörtelzusammensetzungen.

Die erfindungsgemäße Bindemittelzusammensetzung kann auch zu dem Zweck eingesetzt werden, auf einem Gegenstand eine wasserbeständige Außenoberfläche zu schaffen. Dazu wird zunächst ein Gemisch aus der erfindungsgemäßen Zusammensetzung und Wasser bereitgestellt. Das zunächst plastische Gemisch erstarrt in der Folge zu einem wasserbeständigen, harten Baustoff, in dem Wasser sowohl chemisch als adsorptiv gebunden ist.

Auf diese Weise kann z.B. auch ein Gegenstand wie eine Gipskartonplatte oder ein Gegenstand mit vorgetäuschtem Steineffekt hergestellt werden.

Somit stellt eine erfindungsgemäße Zusammensetzung, die zu Wasser zugesetzt wird und die eine hydratisierte Baustoffzusammensetzung ergibt, die nach dem Aushärten wasserbeständig ist, eine bevorzugte Ausführungsform der Erfindung dar.

Ein weiterer Gegenstand der Erfindung ist eine hydratisierte Baustoffzusammensetzung, umfassend Wasser und das Gemisch der Komponenten (a), (b), (c) und (d), vorzugsweise
(i) Wasser und
(ii) das Gemisch der Komponenten (a), (b), (c) und (d)
im Masseverhältnis (i) zu (ii) von 0,2 :1 bis 1:1, insbesondere 0,35:1 bis 0,7:1. Dieser hydratisierte Baustoff kann ebenfalls ein oder mehrere Additive enthalten, die sich bei der Herstellung zementartiger Zusammensetzungen verwenden lassen.

Additive können als Teil der trockenen Bindemittelzusammensetzung oder bauchemischen Zusammensetzung oder gesondert zugegeben werden. Geeignete, optional einsetzbare Additive werden weiter unten genannt.

Ein weiterer Gegenstand der vorliegenden Erfindung ist ein bauchemisches Produkt, vorzugsweise ausgewählt aus Fliesenkleber, Fugenmörtel, Putz, Mauermörtel, Estrichmörtel, Reparaturmörtel, Ankermörtel, selbstverlaufende Fußbodenausgleichsmasse, Klebe- und Armierungsmörtel für Wärmedämmverbundsysteme (external thermal insulation composite systems: "etics"), Wand- und Bodenspachtelmassen, Dichtschlämme, umfassend 1 bis 90 Gew.-%, vorzugsweise 10-70 Gew.-%, insbesondere 20-55 Gew.-% einer erfindungsgemäßen Bindemittelzusammensetzung.

Ein weiterer Gegenstand der Erfindung ist ein Verfahren zum Einsatz einer erfindungsgemäßen Zusammensetzung oder eines bauchemischen Produktes wie zuvor beschrieben als Bindemasse zwischen mindestens zwei Gegenständen, umfassend das Auftragen und Erhärten lassen der mit Wasser angemachten Zusammensetzung oder des mit Wasser angemachten bauchemischen Produkts, unter Bildung einer wasserbeständigen Bindung zwischen den Gegenständen.

Ein weiterer Gegenstand der Erfindung ist ein Verfahren zum Einsatz einer erfindungsgemäßen Zusammensetzung oder eines bauchemischen Produktes wie zuvor beschrieben, umfassend das Auftragen und Erhärten lassen der mit Wasser angemachten Zusammensetzung oder des mit Wasser angemachten bauchemischen Produkts, zur Ausbildung einer wasserbeständigen Außenoberfläche.

Geeignete bauchemische Produkte kommen insbesondere als feine Pulver in Betracht, welche dann vor Ort bzw. an der konkreten Baustelle mit Wasser angesetzt werden.

Erfindungsgemäße bauchemische Produkte enthalten neben dem vorgenannten erfindungsgemäßen Bindemittel mindestens einen Zuschlagsstoff, insbesondere ausgewählt aus Quarzsand, Kalksteinsand, Kalksteinmehl, Verdickungsmittel (z. B. auf Basis von Schichtsilicaten oder Stärkeethern), Wasserrückhaltemittel (z.B. Celluloseether), Dispersionspulver (z. B. EVA-Pulver), Erhärtungsbeschleuniger (z. B. Alkalicarbonate, Cacliumsulfatdihydrat, Tonerdezemente), Verzögerer, Verflüssiger und Entschäumer.

Erfindungsgemäße bauchemische Produkte können auch Leichtzuschlagstoffe enthalten. Diese Leichtzuschlagstoffe weisen typischerweise Rohdichten von weniger als 2000 kg/ m³, bevorzugt weniger als 1500 kg/m³, ganz besonders bevorzugt weniger als 1200 kg/m³ oder gar weniger als 1000 kg/m³ auf. Hierfür geeignet sind z.B. Mikrohohlkugeln aus Glas, Keramik oder Kunststoff, Blähglas, Blähglimmer, Blähperlite, Blähschiefer, Blähton, Steinkohlenflugasche, Ziegelsplitt, Naturbims, Tuff, Lava Hüttensandbims und Kesselsand. Es können dabei auch zwei oder mehr dieser unterschiedlichen Leichtzuschlagstoffe miteinander kombiniert werden. Der Einsatz dieser Leichtzuschlagstoffe ist vorteilhaft, da hierdurch das spezifische Gewicht der Gesamtrezeptur gesenkt werden kann.

Erfindungsgemäße bauchemische Produkte, insbesondere in Form von pulverförmigen Zusammensetzungen, können beispielsweise die folgenden Bestandteile enthalten, wobei die nachfolgenden Mengenangaben jeweils auf die bauchemischen Produkte bezogen sind:
- erfindungsgemäßes Bindemittel: 10 bis 80 Gew.-%, vorzugsweise 15 bis 65 Gew.-%, bevorzugt 20 bis 55 Gew.- %;
- ggf. Quarzsand und/oder Kalksteinsand: 0 bis 70 Gew.- %, vorzugsweise 1 bis 65 Gew.-%, insbesondere 10 bis 60 Gew.- %,
- ggf. Kalksteinmehl: 0 bis 75 Gew.- %, vorzugsweise 1 bis 65 Gew.-%, insbesondere 10 bis 60 Gew.- %,
- ggf. Verdickungsmittel, wie beispielsweise anorganische Verdicker (z.B. Kieselsäure, Schichtsilicate), organische Verdicker (z.B. Stärkeether), abgewandelte Naturstoffe (z.B. Pflanzenfasern), organische vollsynthetische Verdicker (z.B. Polyvinylalkohole, Polyacrylamide): 0 bis 3 Gew.- %, insbesondere 0,2 bis 1 Gew.- %,
- ggf. Wasserrückhaltemittel, wie beispielsweise Methylcellulose (z.B. Methylhydroxyethylcellulose, Methylhydroxypropylcellulose, Ethylhydroxyethylcellulose, Hydroxyethylcellulose): 0 bis 3 Gew.-% , insbesondere 0,1 bis 1 Gew.-%,
- ggf. Dispersionspulver: 0 bis 15 Gewichts-%, vorzugsweise 0,1 bis 10 Gew.-%, insbesondere 0,5 bis 6 Gew.- %,
- ggf. (Erhärtungs-)Beschleuniger, wie beispielsweise Kaliumsulfat, Aluminiumsulfat, Eisen (II) Sulfat, Natriumcarbonat, Calciumsulfatdihydrat: 0,1 bis 5 Gew.- %, insbesondere 0,5 bis 3 Gew.-%,
- ggf. Entschäumer: 0 bis 2 Gew.- %, insbesondere 0,1 bis 1 Gew.- %,
- ggf. Leichtzuschlagstoffe: 0 bis 50 Gew.-%, vorzugsweise 2 bis 45 Gew.- %, insbesondere 3 bis 40 Gew.- %,
- ggf. Tonerdezement: 0 bis 20 Gew.- %, vorzugsweise 0,1 bis 10 Gew.- %, insbesondere 1 bis 5 Gew.- %,
- ggf. Verzögerer, wie beispielsweise Zitronensäure, Weinsäure, Natriumgluconat: 0 bis 3 Gew.- %, insbesondere 0,01 bis 0,5 Gew.- %,
- ggf. Fasern, die beispielsweise aus Naturcellulose, Glas und/oder thermoplastischen Materialien bestehen: 0 bis 7 Gew.- %, vorzugsweise 0,1 bis 5 Gew.-%,
- ggf. Farbstoffe, beispielsweise Pigmente, wie Eisenoxide; z.B. 0,001 bis 5 Gew.-%,
- ggf. andere anorganische teilchenförmige Materialien mit Puzzolan-Eigenschaften, wie beispielsweise feine kieselsäurehaltige Materialien, Flugasche, Hochofenschlacke, Diatomeenerde: 0 bis 30 Gew.-%, vorzugsweise 2 bis 20 Gew.-%, insbesondere 5 bis 15 Gew.-%,
- ggf. verlaufsfördernde Mittel (Verflüssiger), beispielsweise Polymerisate auf Carboxylatbasis, Polyacrylsäuren und ihre Salze, Lignosulphonatsalze und sulfonierte Melamin- oder Naphtalinformaldehyde: 0 bis 2 Gew.-% , insbesondere 0,01 bis 1 Gew.-%.
- ggf. Paraffinöle, Weißöl: 0 bis 5Gew.-%, vorzugsweise 0,01 bis 2 Gew. %.

Ein bevorzugter Fliesenkleber umfasst:
- Anhydrit II: 20 bis 40 Gew.-%,
- Portlandzement CEM I: 2 bis 10 Gew.-%,
- Klinoptilolit oder Mischung aus Metakaolin und Klinoptilolit: 2 bis 25 Gew.-%,
- Quarzsand: 40 bis 70 Gew.-%,
- Wasserrückhaltemittel: 0,1 bis 0,8 Gew.-%,
- redispergierbares Polymerpulver (insbesondere Vinylacetat-Ethylen-Mischpolymerisat-basiert): 0,1 bis 3 Gew.-%,
- Verzögerer: 0 bis 1 Gew.-%
- K₂SO₄ und/oder Aluminiumsulfat: 0,1 bis 3 Gew.-%.

Ein bevorzugter Fugenmörtel umfasst:
- Anhydrit II: 15 bis 40 Gew.-%,
- Portlandzement CEM I: 2 bis 10 Gew.-%,
- Klinoptilolit oder Mischung aus Metakaolin und Klinoptilolit: 2 bis 25 Gew.-%,
- Quarzsand: 40 bis 70 Gew.-%,
- Kalksteinmehl: 0 bis 20 Gew.-%,
- Wasserrückhaltemittel: 0,01 bis 1 Gew.-%,
- redispergierbares Polymerpulver (insbesondere Vinylacetat-Ethylen-Mischpolymerisat-basiert): 0,1 bis 3 Gew.-%,
- Verzögerer: 0 bis 1 Gew.-%
- K₂SO₄ und/oder Aluminiumsulfat: 0,1 bis 3 Gew.-%.

Ein bevorzugter Putz- und Mauermörtel umfasst:
- Anhydrit II: 10 bis 30 Gew.-%,
- Portlandzement CEM I: 2 bis 10 Gew.-%,
- Klinoptilolit oder Mischung aus Metakaolin und Klinoptilolit: 2 bis 18 Gew.-%,
- Quarzsand: 50 bis 85 Gew.-%,
- Wasserrückhaltemittel: 0,01 bis 0,5 Gew.-%,
- Verzögerer: 0,01 bis 0,5 Gew.-%
- K₂SO₄ und/oder Aluminiumsulfat: 0,1 bis 2 Gew.-%.

Ein solcher Putz- und Mauermörtel ist für die Innen- und Außenanwendung geeignet, ist wasser- und witterungsbeständig; er erfüllt die Mindestanforderungen der EN 998-1 (Putzmörtel) und 998-2 (Mauermörtel).

Ein bevorzugter Klebe- und Armierungsmörtel für Wärmedämmverbundsysteme (ETICS) umfasst:
- Anhydrit II: 15 bis 30 Gew.-%,
- Portlandzement CEM I: 2 bis 10 Gew.-%,
- Klinoptilolit oder Mischung aus Metakaolin und Klinoptilolit: 2 bis 15 Gew.-%,
- Quarzsand: 40 bis 70 Gew.-%,
- Kalksteinmehl (d50 vorzugsweise 5 bis 15 µm): 2 bis 10 Gew.-%,
- Wasserrückhaltemittel: 0,1 bis 1 Gew.-%,
- Fasern: 0 bis 0,5 Gew.-%,
- redispergierbares Polymerpulver (insbesondere Vinylacetat-Ethylen-Mischpolymerisat-basiert): 0,1 bis 3 Gew.-%,
- Hydrophobierungsmittel: 0 bis 1 Gew.-%,
- Verzögerer: 0 bis 0,8 Gew.-%,
- K₂SO₄ und/oder Aluminiumsulfat: 0,1 bis 3 Gew.-%.

Ein bevorzugter Estrichmörtel, insbesondere einsetzbar für Flächen mit Feuchtigkeitsbeaufschlagung (z.B. Badezimmer, Kellerräume) umfasst:
- Anhydrit II: 10 bis 20 Gew.-%,
- Portlandzement CEM I: 2 bis 5 Gew.-%,
- Klinoptilolit oder Mischung aus Metakaolin und Klinoptilolit: 1 bis 7 Gew.-%,
- Quarzsand: 10 bis 30 Gew.-%,
- Grober Quarzsand/Kies (Körnung vorzugsweise 0,2-4 mm): 45 bis 75 Gew.-%,
- Verflüssiger: 0 bis 0,3 Gew.-%,
- Verzögerer: 0 bis 0,4 Gew.-%,
- K₂SO₄ und/oder Aluminiumsulfat: 0,1 bis 3 Gew.-%.

Man kann alternativ auf Basis des Estrichmörtels auch ein Estrichbindemittel formulieren, das man unter Weglassen des groben Quarzsandes /Kieses erhält. In diesem Fall wird der Sand/Kies dann unmittelbar auf der Baustelle, beziehungsweise, bei Estrichen aus dem Fahrmischer, im Mischwerk zugegeben.

Eine bevorzugte selbstverlaufende Fußbodenausgleichsmasse umfasst:
- Anhydrit II: 15 bis 40 Gew.-%,
- Portlandzement CEM I: 2 bis 10 Gew.-%,
- Klinoptilolit oder Mischung aus Metakaolin und Klinoptilolit: 2 bis 10 Gew.-%,
- Kalksteinmehl: 10 bis 40 Gew.-%,
- Quarzsand : 30 bis 70 Gew.-%,
- redispergierbares Polymerpulver (insbesondere Vinylacetat-Ethylen-Mischpolymerisat-basiert): 0,1 bis 5 Gew.-%,
- Verflüssiger: 0,01 bis 2 Gew.-%,
- Wasserrückhaltemittel (insbesondere Hydroxyethylcellulose): 0,02 bis 0,5 Gew.-%,
- Verzögerer: 0 bis 1 Gew.-%,
- K₂SO₄ und/oder Aluminiumsulfat: 0,1 bis 3 Gew.-%.

Die erfindungsgemäßen bauchemischen Produkte Fliesenkleber, Fugenmörtel, Putz- und Mauermörtel, -Klebe- und Armierungsmörtel, Estrich, selbstverlaufende Fußbodenausgleichsmasse, erfüllen jeweils die genormten Mindestanforderungen an die jeweiligen Produkte, nämlich:
- Fliesenkleber: Klasse C1 gemäß EN 12004: 2007,
- Fugenmörtel : Klasse CG1 gemäß EN 13888: 2009,
- Mauermörtel: Festigkeitsklassen M1 bis M10 gemäß EN 998-2 : 2010,
- selbstverlaufende Fußbodenausgleichsmasse: Festigkeitsklassen ≥ C20 F5 gemäß EN 13813: 2002,
- Klebe- und Armierungsmörtel: erfüllt erforderliche Haftzugfestigkeiten zum Untergrund und Dämmstoff, auch nach Wasserlagerung gemäß ETAG 004, EN 13499,
- Estrich: Festigkeitsklassen ≥ C20 F4 gemäß EN13813: 2002.

### Beispiele:

### A) Bindemittelzusammensetzungen

Durch Vermischen der in Tabelle 1 aufgeführten Bestandteile wurden die Vergleichszusammensetzungen V1 bis V3 und die erfindungsgemäßen Zusammensetzungen B1 bis B8 hergestellt.

**Tabelle 1:**

| **Beispiel** | **Anhydrit [Gew.-%]** | **CEM I 52,5 R [Gew.-%]** | **Zeolith [Gew.-%]** | **Metakaolin [Gew.-%]** | **Al₂SO₄ [Gew.-%]** | **K₂SO₄ [Gew.-%]** |
|---|---|---|---|---|---|---|
| V1 | 99,0 | 0 | 0 | 0 | 0 | 1,0 |
| V2 | 89,1 | 9,9 | 0 | 0 | 0 | 1,0 |
| V3 | 79,2 | 19,8 | 0 | 0 | 0 | 1,0 |
| B1 | 79,2 | 14,6 | 5,2 | 0 | 0 | 1,0 |
| B2 | 79,2 | 14,6 | 5,2 | 0 | 1,0 | 0 |
| B3 | 75,2 | 13,9 | 9,9 | 0 | 1,0 | 0 |
| B4 | 75,2 | 13,9 | 9,9 | 0 | 0 | 1,0 |
| B5 | 71,7 | 13,2 | 14,1 | 0 | 0 | 1,0 |
| B6 | 79,2 | 14,6 | 2,6 | 2,6 | 0 | 1,0 |
| B7 | 75,2 | 13,9 | 4,95 | 4,95 | 0 | 1,0 |
| B8 | 71,7 | 13,2 | 7,05 | 7,05 | 0 | 1,0 |

| | | | | | | |
|---|---|---|---|---|---|---|
| CEM I 52,5 R: Portlandzement | | | | | | |

Die Bindemittelzusammensetzungen wurden zu Mörtelmassen (siehe B) unten) und Fliesenklebern (siehe C) unten) weiterverarbeitet und diese bezüglich wesentlicher Eigenschaften untersucht.

### B) Mörtelmassen

Die Vergleichszusammensetzungen V1 bis V3 und die erfindungsgemäßen Zusammensetzungen B1 bis B8 wurden jeweils im Gewichtsverhältnis 1 : 2 mit Quarzsand H33 vermischt. Es resultierten die Vergleichsmörtelmassen VM1 bis VM3 und die erfindungsgemäßen Mörtelmassen BM1 bis BM8.

Diese wurden jeweils im Gewichtsverhältnis 4 : 1 mit Wasser angemacht (4 Teile Zusammensetzung auf 1 Teil Wasser) und aus den resultierenden verarbeitungsfertigen Mörtelmassen wie in der Norm EN 196-1 beschrieben prismenförmige Prüfkörper mit den Abmessungen 4 x 4 x 16 cm hergestellt. Die Prüfkörper wurden nach 24 h entschalt und bezüglich der Biegezugfestigkeit und Druckfestigkeit untersucht. Zur Bestimmung von Biegezugfestigkeit und Druckfestigkeit nach Wasserlagerung wurde gemäß EN 196-1 vorgegangen. Dazu wurden die Prismen direkt nach dem Entschalen unter Wasser gelagert und Biegezugfestigkeit und Druckfestigkeit jeweils nach 6 Tagen, 27 Tagen und 55 Tagen Lagerung in Wasser, d.h. nach einer Gesamtlagerzeit von 7 Tagen, 28 Tagen bzw. 56 Tagen bestimmt. Zudem wurden Biegezugfestigkeit und Druckfestigkeit nach Trockenlagerung (7 Tage, 28 Tage und 56 Tage Lagerung bei 23°C und 50 % relative Luftfeuchtigkeit (r.F.)) bestimmt, wobei die Messungen gemäß EN 196-1 durchgeführt wurden. Die Ergebnisse sind in Tabelle 2 zusammengefasst, wobei sämtliche Werte in N/mm² angegeben sind.

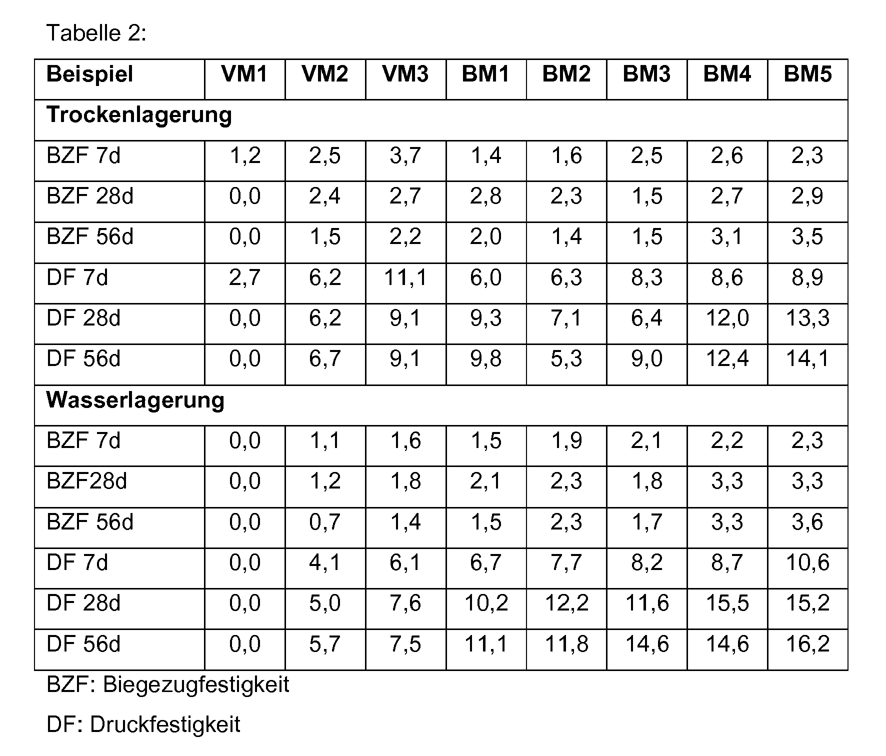

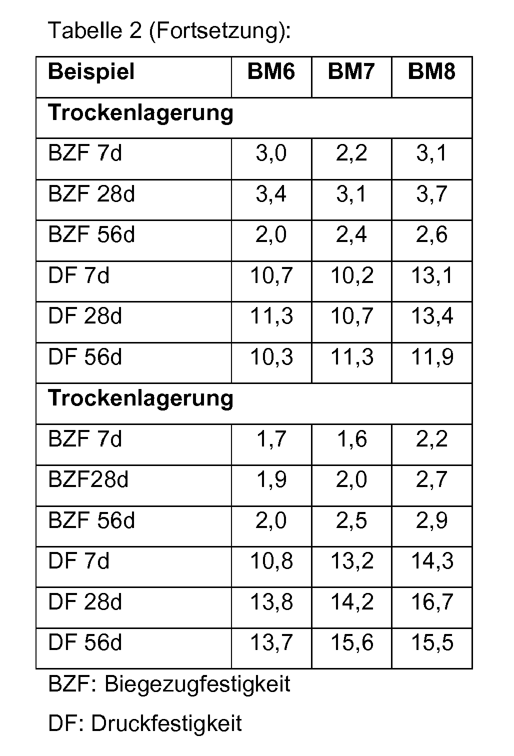

Es zeigt sich, dass Mörtelmassen auf Basis erfindungsgemäßer Bindemittelzusammensetzungen nach Trockenlagerung hinreichende Biegezugfestigkeiten und Druckfestigkeiten aufweisen. Bei Wasserlagerung werden Biegezugfestigkeiten und Druckfestigkeiten erreicht, die denen von Mörtelmassen, deren Bindemittel rein auf Anhydrit oder einem Anhydrit/Portlandzement-Gemisch basieren, überlegen sind. Die erfindungsgemäßen Mörtelmassen zeichnen sich demnach durch eine erhöhte Langzeitstabilität unter Feuchtigkeitsbeanspruchung aus.

### C) Fliesenkleber

Die Vergleichszusammensetzung V3 und die erfindungsgemäßen Zusammensetzungen B1 und B3 bis B8 wurden zu Fliesenklebern weiterverarbeitet. Dazu wurden 46,46 Gew-% der jeweiligen Bindemittelzusammensetzung mit 51,54 Gew.-% Quarzsand einer Körnung von 0,1-0,5 mm, 0,5 Gew.-% Methylcellulose und 1,5 Gew.-% eines redispergierbaren Polymerpulvers auf Vinylacetat/Ethylen-Basis miteinander vermischt. Es resultierten der Vergleichsfliesenkleber VF3 und die erfindungsgemäßen Fliesenkleber BF1 und BF3 bis BF8.

Diese wurden jeweils im Gewichtsverhältnis 3 : 1 mit Wasser angemacht (3 Teile Zusammensetzung auf 1 Teil Wasser) und die resultierenden verarbeitungsfertigen Fliesenkleber bezüglich ihrer Haftzugwerte untersucht.

Die Haftzugfestigkeitswerte nach Trockenlagerung wurden gemäß Prüfverfahren EN 1348:2007, 8.2 (gemessen nach 28 Tagen und 56 Tagen), die Haftzugfestigkeitswerte nach Wasserlagerung gemäß Prüfverfahren EN 1348:2007, 8.3 (gemessen nach 28 Tagen und 56 Tagen, wobei die Lagerung zunächst 7 Tage bei 23°C und 50 % r.F. und anschließend für 21 bzw. 49 Tage unter Wasser erfolgte) bestimmt.

Die Ergebnisse sind in Tabelle 3 zusammengefasst, wobei sämtliche Werte in N/mm² angegeben sind.

**Tabelle 3:**

| **Beispiel** | **VF3** | **BF1** | **BF3** | **BF4** | **BF5** | **BF6** | **BF7** | **BF8** |
|---|---|---|---|---|---|---|---|---|
| **Trockenlagerung** | | | | | | | | |
| HZF 28d | 1,4 | 1,4 | 1,4 | 1,3 | 1,4 | 1,4 | 1,4 | 1,4 |
| HZF 56d | 1,3 | 1,4 | 1,2 | 1,4 | 1,4 | 1,3 | 1,4 | 1,3 |

| **Wasserlagerung** | | | | | | | | |
|---|---|---|---|---|---|---|---|---|
| HZF 28d | 0,2 | 0,4 | 0,4 | 0,7 | 0,7 | 0,4 | 0,6 | 0,6 |
| HZF 56d | 0,2 | 0,4 | 0,4 | 0,7 | 0,7 | 0,6 | 0,8 | 0,8 |

| | | | | | | | | |
|---|---|---|---|---|---|---|---|---|
| HZF = Haftzugfestigkeit | | | | | | | | |

Es zeigt sich, dass sich auf Basis der erfindungsgemäßen Bindemittelzusammensetzungen Fliesenkleber formulieren lassen, die Fliesenklebern auf Basis eines Anhydrit/Portlandzement-Gemischs ohne Zugabe von Zeolith hinsichtlich der Stabilität unter Feuchtigkeitsbeanspruchung deutlich überlegen sind.

## Patentansprüche

1. Bindemittelzusammensetzung, umfassend
(a) Anhydrit in einer Menge von ≥ 50 Gew.- Teilen,
(b) Portlandzement in einer Menge von 1 bis 45 Gew.- Teilen,
(c) Zeolith oder Mischung aus Metakaolin und Zeolith in einer Gesamtmenge von 1 bis 30 Gew.-Teilen,
(d) zusätzliches Sulfatsalz in einer Menge von 0,1 bis 10 Gew.-Teilen,
jeweils bezogen auf eine Gesamtmenge von 100 Gew.- Teilen, gebildet von den vier Komponenten (a) Anhydrit, (b) Portlandzement, (c) Zeolith oder Mischung aus Metakaolin und Zeolith, (d) zusätzliches Sulfatsalz.

2. Zusammensetzung nach Anspruch 1 , **dadurch gekennzeichnet, dass** Anhydrit in einer Menge von 60 bis 98 Gew.- Teilen, vorzugsweise in einer Menge von 60 bis 97,9 Gew.-Teilen, insbesondere in einer Menge von 60 bis 89 Gew.- Teilen, besonders bevorzugt in einer Menge von 70 bis 79 Gew.-Teilen und ganz besonders bevorzugt in einer Menge von 70 bis 78 Gew.- Teilen enthalten ist, bezogen auf eine Gesamtmenge von 100 Gew.- Teilen, die gebildet ist von den vier Komponenten (a) Anhydrit, (b) Portlandzement, (c) Zeolith oder Mischung aus Metakaolin und Zeolith, (d) zusätzliches Sulfatsalz.

3. Zusammensetzung nach mindestens einem der Ansprüche 1 oder 2, **dadurch gekennzeichnet, dass** der Portlandzement in einer Gesamtmenge von 5 bis 30 Gew.- Teilen, vorzugsweise 8 bis 20 Gew.-Teilen, insbesondere 10 bis 20 Gew.- Teilen und ganz besonders bevorzugt 11 bis 20 Gew.- Teilen enthalten ist, bezogen auf eine Gesamtmenge von 100 Gew.- Teilen, gebildet von den vier Komponenten (a) Anhydrit, (b) Portlandzement, (c) Zeolith oder Mischung aus Metakaolin und Zeolith, (d) zusätzliches Sulfatsalz.

4. Zusammensetzung nach mindestens einem der Ansprüche 1 bis 3, **dadurch gekennzeichnet, dass** Zeolith oder Mischung aus Metakaolin und Zeolith in einer Gesamtmenge von 5 bis 25 Gew.- Teilen, vorzugsweise 8 bis 20 Gew.- Teilen, insbesondere 10 bis 20 Gew.- Teilen enthalten ist, bezogen auf eine Gesamtmenge von 100 Gew.- Teilen, gebildet von den vier Komponenten (a) Anhydrit, (b) Portlandzement, (c) Zeolith oder Mischung aus Metakaolin und Zeolith, (d) zusätzliches Sulfatsalz.

5. Zusammensetzung nach mindestens einem der Ansprüche 1 bis 4, **dadurch gekennzeichnet, dass** als Zeolith natürlicher Zeolith enthalten ist, vorzugsweise ausgewählt aus Blätterzeolithen, vorteilhafterweise Zeolithen der Heulandit-Gruppe, insbesondere Klinoptilolith, wobei die mittlere Teilchengröße d50 des Zeoliths vorzugsweise unter 100 µm, vorteilhafterweise unter 50 µm und insbesondere über 0,5 µm und unter 15 µm liegt.

6. Zusammensetzung nach mindestens einem der Ansprüche 1 bis 5, **dadurch gekennzeichnet, dass** als Anhydrit der Anhydrit II eingesetzt wird, der insbesondere eine mittlere Teilchengröße d50 von 5 bis 30 µm aufweist.

7. Zusammensetzung nach mindestens einem der Ansprüche 1 bis 6, **dadurch gekennzeichnet, dass** das zusätzliche Sulfatsalz in einer Menge von 1 bis 5 Gew.- Teilen enthalten ist, bezogen auf eine Gesamtmenge von 100 Gew.- Teilen, gebildet von den vier Komponenten (a) Anhydrit, (b) Portlandzement, (c) Zeolith oder Mischung aus Metakaolin und Zeolith, (d) zusätzliches Sulfatsalz.

8. Zusammensetzung nach mindestens einem der Ansprüche 1 bis 7, **dadurch gekennzeichnet, dass** das zusätzliche Sulfatsalt ausgewählt ist aus Alkalisulfat, Eisen(II)-sulfat, Aluminiumsulfat und Gemischen davon.

9. Bauchemisches Produkt, umfassend 1 bis 90 Gew.-%, vorzugsweise 10-70 Gew.- %, insbesondere 20-55 Gew.-% einer Bindemittelzusammensetzung nach mindestens einem der Ansprüche 1 bis 8.

10. Verwendung des bauchemischen Produktes nach Anspruch 9 als eines der folgenden bauchemischen Produkte ausgewählt aus Fliesenklebern, Fugenmörteln, Putzmörteln, Mauermörteln, Estrichmörteln, Reparaturmörteln, Ankermörteln, Klebe- und Armierungsmörteln für Wärmedämmverbundsysteme, selbstverlaufenden Fußbodenausgleichsmassen, Wand- und Bodenspachtelmassen, und Dichtschlämmen.

11. Verfahren zum Einsatz einer mit Wasser angemachten Zusammensetzung nach einem der Ansprüche 1 bis 8 oder eines mit Wasser angemachten bauchemischen Produkts nach Anspruch 9, als Bindemasse zwischen mindestens zwei Gegenständen, umfassend das Auftragen und Erhärten lassen der Zusammensetzung oder des bauchemischen Produkts unter Bildung einer wasserbeständigen Bindung zwischen den Gegenständen.

12. Verfahren zum Einsatz einer mit Wasser angemachten Zusammensetzung nach einem der Ansprüche 1 bis 8 oder eines mit Wasser angemachten bauchemischen Produkts nach Anspruch 9, umfassend das Auftragen und Erhärten lassen der mit Wasser angemachten Zusammensetzung zur Ausbildung einer wasserbeständigen Außenoberfläche.

## Claims

1. A binder composition, comprising
(a) anhydrite in an amount of ≥ 50 parts by weight,
(b) Portland cement in an amount of from 1 to 45 parts by weight,
(c) zeolite or a mixture of metakaolin and zeolite in a total amount of from 1 to 30 parts by weight,
(d) additional sulfate salt in an amount of from 0.1 to 10 parts by weight,
in each case based on a total amount of 100 parts by weight, formed of the four components (a) anhydrite, (b) Portland cement, (c) zeolite or a mixture of metakaolin and zeolite, (d) additional sulfate salt.

2. The composition according to claim 1, **characterized in that** anhydrite is contained in an amount of from 60 to 98 parts by weight, preferably in an amount of from 60 to 97.9 parts by weight, in particular in an amount of from 60 to 89 parts by weight, particularly preferably in an amount of from 70 to 79 parts by weight, and quite particularly preferably in an amount of from 70 to 78 parts by weight, based on a total amount of 100 parts by weight which is formed of the four components (a) anhydrite, (b) Portland cement, (c) zeolite or a mixture of metakaolin and zeolite, (d) additional sulfate salt.

3. The composition according to at least one of claims 1 or 2, **characterized in that** the Portland cement is contained in a total amount of from 5 to 30 parts by weight, preferably from 8 to 20 parts by weight, in particular from 10 to 20 parts by weight, and quite particularly preferably from 11 to 20 parts by weight, based on a total amount of 100 parts by weight, formed of the four components (a) anhydrite, (b) Portland cement, (c) zeolite or a mixture of metakaolin and zeolite, (d) additional sulfate salt.

4. The composition according to at least one of claims 1 to 3, **characterized in that** zeolite or a mixture of metakaolin and zeolite is contained in a total amount of from 5 to 25 parts by weight, preferably from 8 to 20 parts by weight, in particular from 10 to 20 parts by weight, based on a total amount of 100 parts by weight, formed of the four components (a) anhydrite, (b) Portland cement, (c) zeolite or a mixture of metakaolin and zeolite, (d) additional sulfate salt.

5. The composition according to at least one of claims 1 to 4, **characterized in that** natural zeolite is contained as zeolite, preferably selected from foliated zeolites, advantageously zeolites of the heulandite group, in particular clinoptilolite, the average particle size d50 of the zeolite preferably being less than 100 µm, advantageously less than 50 µm, and in particular greater than 0.5 µm and less than 15 µm.

6. The composition according to at least one of claims 1 to 5, **characterized in that** anhydrite II is used as anhydrite, which anhydrite II has in particular an average particle size d50 of from 5 to 30 µm.

7. The composition according to at least one of claims 1 to 6, **characterized in that** the additional sulfate salt is contained in an amount of from 1 to 5 parts by weight, based on a total amount of 100 parts by weight, formed of the four components (a) anhydrite, (b) Portland cement, (c) zeolite or a mixture of metakaolin and zeolite, (d) additional sulfate salt.

8. The composition according to at least one of claims 1 to 7, **characterized in that** the additional sulfate salt is selected from alkali sulfate, iron(II) sulfate, aluminum sulfate and mixtures thereof.

9. A construction chemical product, comprising from 1 to 90 wt.%, preferably from 10 to 70 wt.%, in particular from 20 to 55 wt.%, of a binder composition according to at least one of claims 1 to 8.

10. The use of the construction chemical product according to claim 9 as one of the following construction chemical products selected from tile adhesives, jointing mortars, plaster mortars, masonry mortars, screed mortars, repair mortars, anchor mortars, adhesive and reinforcing mortars for composite heat insulation systems, self-levelling floor levelling compounds, wall and ground surfacers, and sealing slurries.

11. A method for the use of a composition according to one of claims 1 to 8 which has been mixed with water or of a construction chemical product according to claim 9 which has been mixed with water, as a binding compound between at least two objects, comprising applying the composition or the construction chemical product and leaving it to harden so as to form a water-resistant bond between the objects.

12. The method for the use of a composition according to one of claims 1 to 8 which has been mixed with water or of a construction chemical product according to claim 9 which has been mixed with water, comprising applying the composition mixed with water and leaving it to harden so as to form a water-resistant outer surface.

## Revendications

1. Composition d'agent liant, comprenant
(a) de l'anhydrite dans une quantité de ≥ 50 parties en poids,
(b) du ciment Portland dans une quantité allant de 1 à 45 parties en poids,
(c) de la zéolithe ou un mélange de métakaolin et de zéolithe dans une quantité totale allant de 1 à 30 parties en poids,
(d) du sel de sulfate supplémentaire dans une quantité allant de 0,1 à 10 parties en poids,
respectivement rapporté à une quantité totale de 100 parties en poids, formée par les quatre composants (a) l'anhydrite, (b) le ciment Portland, (c) la zéolithe ou un mélange de métakaolin et de zéolithe, (d) le sel de sulfate supplémentaire.

2. Composition selon la revendication 1, **caractérisée en ce que** l'anhydrite est présent dans une quantité allant de 60 à 98 parties en poids, de préférence dans une quantité allant de 60 à 97,9 parties en poids, en particulier dans une quantité allant de 60 à 89 parties en poids, de manière particulièrement préférée dans une quantité allant de 70 à 79 parties en poids et de manière tout particulièrement préférée dans une quantité allant de 70 à 78 parties en poids, rapporté à une quantité totale de 100 parties en poids, qui est formée par les quatre composants (a) l'anhydrite, (b) le ciment de Portland, (c) la zéolithe ou un mélange de métakaolin et de zéolithe, (d) le sel de sulfate supplémentaire.

3. Composition selon au moins une des revendications 1 ou 2, **caractérisée en ce que** le ciment Portland est présent dans une quantité totale allant de 5 à 30 parties en poids, de préférence de 8 à 20 parties en poids, en particulier des 10 à 20 parties en poids et de manière tout particulièrement préférée de 11 à 20 parties en poids, rapporté à une quantité totale de 100 parties en poids, qui est formée par les quatre composants (a) l'anhydrite, (b) le ciment Portland, (c) la zéolithe ou un mélange de métakaolin et de zéolithe, (d) le sel de sulfate supplémentaire.

4. Composition selon au moins une des revendications 1 à 3, **caractérisée en ce que** la zéolithe ou le mélange de métakaolin et de zéolithe est présent dans une quantité totale allant de 5 à 25 parties en poids, de préférence de 8 à 20 parties en poids, en particulier de 10 à 20 parties en poids, rapporté à une quantité totale de 100 parties en poids, qui est formée par les quatre composants (a) l'anhydrite, (b) le ciment Portland, (c) la zéolithe ou un mélange de métakaolin et de zéolithe, (d) le sel de sulfate supplémentaire.

5. Composition selon au moins une des revendications 1 à 4, **caractérisée en ce que** de la zéolithe naturelle est présente en tant que zéolithe, de préférence sélectionnée parmi les stilbites, de manière avantageuse les zéolithes de la famille des heulandites, en particulier la clinoptilolite, la granulométrie moyenne d50 de la zéolithe étant de préférence inférieure à 100 µm, de manière avantageuse inférieure à 50 µm et en particulier supérieure à 0,5 µm et inférieure à 15 µm.

6. Composition selon au moins une des revendications 1 à 5, **caractérisée en ce que** l'anhydrite II est utilisé en tant qu'anhydrite, qui possède en particulier une granulométrie moyenne d50 allant de 5 à 30 µm.

7. Composition selon au moins une des revendications 1 à 6, **caractérisée en ce que** le sel de sulfate supplémentaire est présent dans une quantité allant de 1 à 5 parties en poids, rapporté à une quantité totale de 100 parties en poids, qui est formée par les quatre composants (a) l'anhydrite, (b) le ciment Portland, (c) la zéolithe ou un mélange de métakaolin et de zéolithe, (d) le sel de sulfate supplémentaire.

8. Composition selon au moins une des revendications 1 à 7, **caractérisée en ce que** le sel de sulfate supplémentaire est sélectionné parmi le sulfate alcalin, le sulfate de fer(II), le sulfate d'aluminium et les mélanges de ces derniers.

9. Produit chimique de construction comprenant 1 à 90 % en poids, de préférence 10-70 % en poids, en particulier 20-55 % en poids d'une composition d'agent liant selon au moins une des revendications 1 à 8.

10. Utilisation du produit chimique de construction selon la revendication 9 en tant qu'un des produits chimiques de construction suivants, sélectionnés parmi les adhésifs de carreaux, mortiers de jointoiement, mortiers d'enduit, mortiers de maçonnerie, mortiers de chape, mortiers de réparation, mortiers d'ancrage, les mortiers-colles et les mortiers de renforcement pour des systèmes composites d'isolation thermique, des masses d'équilibrage de plancher auto-nivelantes, des mastics muraux ou de sol, et des mortiers d'étanchéité.

11. Procédé pour l'utilisation d'une composition combinée avec de l'eau selon l'une des revendications 1 à 8 ou d'un produit chimique de construction combiné avec de l'eau selon la revendication 9, en tant que masse liante entre au moins deux objets, comprenant l'application et le fait de laisser durcir la composition ou le produit chimique de construction en formant une liaison imperméable à l'eau entre les objets.

12. Procédé pour l'utilisation d'une composition combinée avec de l'eau selon l'une des revendications 1 à 8 ou d'un produit chimique de construction combiné avec de l'eau selon la revendication 9, comprenant l'application et le fait de laisser durcir la composition combinée avec de l'eau afin de former une surface extérieure imperméable à l'eau.
